# EUROPÄISCHE PATENTSCHRIFT

(11) **EP 2 875 281 B1**
(45) Veröffentlichungstag und Bekanntmachung des Hinweises auf die Patenterteilung: **17.03.2021**
(21) Anmeldenummer: 13734992.4
(22) Anmeldetag: 29.06.2013
(51) Int. Cl.: F21S 41/143, F21S 41/255, F21S 41/663, F21V 5/00, F21Y 115/10, F21S 41/153

(54) **SCHEINWERFER FÜR FAHRZEUGE**
HEADLIGHT FOR VEHICLES
PHARE POUR VÉHICULES

(30) Priorität: 18.07.2012 DE 102012106490
(43) Veröffentlichungstag der Anmeldung: 27.05.2015
(73) Patentinhaber: HELLA GmbH & Co. KGaA, 59552 Lippstadt (DE)
(72) Erfinder: KLOOS, Gerhard, 59597 Erwitte (DE)
(86) Internationale Anmeldenummer: PCT/EP2013/063758
(87) Internationale Veröffentlichungsnummer: WO 2014/012773

(56) Entgegenhaltungen:
- EP-A1- 1 980 787
- DE-A1-102005 030 932
- DE-A1-102008 005 488
- DE-A1-102008 027 320
- DE-A1-102011 054 233
- DE-B3-102009 053 581
- JP-A- H05 266 701
- US-A1- 2013 208 493

## Beschreibung

Die Erfindung betrifft einen Scheinwerfer für Fahrzeuge nach dem Oberbegriff des Patentanspruchs 1.

Aus der DE 10 2008 027 320 A1 ist ein Scheinwerfer für Fahrzeuge bekannt, der eine Mehrzahl von LED-Lichtquellen aufweist, die matrixartig in einem LED-Feld angeordnet sind. Dem LED-Feld ist eine Optikeinheit mit einem ersten Linsenelement und einem zweiten Linsenelement vorgelagert, so dass eine Fernlichtverteilung erzeugt werden kann. Zusätzlich ist eine Ansteuereinheit vorgesehen, die die LED-Lichtquellen derart ansteuert, dass in Abhängigkeit von der aktuellen Verkehrssituation entweder eine Voll-Fernlichtverteilung oder eine Teil-Fernlichtverteilung erzeugt wird. Bei der Voll-Fernlichtverteilung ist eine maximale Anzahl von LED-Lichtquellen eingeschaltet, die den Verkehrsraum ausleuchten, in dem sich kein weiteres Verkehrsobjekt befindet. In der Teil-Fernlichtverteilung ist eine verminderte Anzahl von LED-Lichtquellen eingeschaltet, so dass nicht der gesamte Verkehrsraum, sondern nur ein um einen Entblendungsbereich verminderter Verkehrsraum ausgeleuchtet wird. In dem Entblendungsbereich dieser Lichtverteilung befindet sich ein Verkehrsobjekt, beispielsweise ein vorausfahrendes Fahrzeug oder ein entgegenkommendes Fahrzeug, das nicht geblendet wird. Bei dem bekannten Scheinwerfer wird somit eine "adressierbare" Fernlichtfunktion bereitgestellt, die eine optimale Entblendung anderer Verkehrsobjekte ermöglicht. Die Lichtverteilung setzt sich aus einer Mehrzahl von Lichtflecken zusammen, die durch Abbildung der LED-Lichtquellen mittels der Linsenelemente der Optikeinheit gewonnen werden. Sowohl das erste Linsenelement als auch das zweite Linsenelement sind rotationssymmetrisch ausgebildet und so aufeinander abgestimmt, dass benachbarte Lichtflecken der Lichtverteilung unmittelbar aneinander liegen oder sich überlappen. Das erste Linsenelement und das zweite Linsenelement sind so ausgelegt, dass die Lichtflecken in vertikaler und in horizontaler Richtung eine gleiche Teilung aufweisen, das heißt die Lichtflecken ergeben auf einem Messschirm jeweils eine quadratische Lichtfigur. Nachteilig an dem bekannten Scheinwerfer ist, dass die auf einem Messschirm abgebildeten Lichtflecken nicht stabförmig verlaufen, was zu einer Lichtverteilung mit unterschiedlichen Hauptrichtungen führen würde. Durch beispielsweise Form- oder Positionsänderungen des ersten Linsenelementes und des zweiten Linsenelementes können die Lichtflecken bzw. Einzelabbildungen der LED-Lichtquellen in eine Hauptrichtung gut "aufgeweicht" werden. Allerdings ändert sich hierdurch auch die Farbkorrektion des Scheinwerfers, das heißt die sphärische Aberration, die Koma, der Astigmatismus, die Bildfeldwölbung und komatische Aberration wird beeinträchtigt. Wird die Schaffung von unterschiedlichen Hauptrichtungen in der Lichtverteilung durch ein zusätzliches optisches Element bewirkt, können zusätzliche Probleme bezüglich Lage- und Formtoleranzen sowie der Justierung entstehen. Auch wird hierdurch die Herstellung des Scheinwerfers relativ aufwändig.

Aus der DE 10 2011 054 233 A1 ist ein Scheinwerfer mit einer Mehrzahl von matrixartig angeordneten LED-Lichtquellen sowie einer Optikeinheit aus hintereinander angeordneten Linsenelementen bekannt.

Aus der DE 10 2009 053 581 B3 ist ein Scheinwerfer für Fahrzeuge mit einer Mehrzahl von matrixartig angeordneten LED-Lichtquellen und einer in Hauptabstrahlrichtung vorne angeordneten Optikeinheit bekannt, um eine vorgegebene Lichtverteilung zu erzeugen. Die Optikeinheit umfasst erste Linsenelemente, die jeweils mit Lichtleitelementen verbunden sind, an deren Lichteinkoppelfläche jeweils eine LED-Lichtquelle angeordnet ist. Die ersten Linsenelemente bilden zusammen mit den Lichtleitelementen eine Primäroptik der Optikeinheit, mittels derer das Licht parallelisiert wird. In Hauptabstrahlrichtung vor der Primäroptik ist als Sekundäroptik ein rotationssymmetrisches zweites Linsenelement vorgesehen, das die auftreffenden Lichtstrahlen entsprechend der vorgegebenen Lichtverteilung abbildet. Die ersten Linsenelemente dienen somit zur Kollimation sowohl in vertikaler als auch in horizontaler Richtung in gleichem Maße.

Es ist daher Aufgabe der vorliegenden Erfindung, einen Scheinwerfer für Fahrzeuge derart weiterzubilden, dass auf einfache Weise eine Lichtverteilung mit unterschiedlichen Hauptrichtungen erzeugbar ist.

Zur Lösung dieser Aufgabe weist die Erfindung die Merkmale des Patentanspruchs 1 auf.
Die Erfindung ermöglicht die Bereitstellung einer Lichtverteilung, die sich aus Lichtflecken zusammensetzt, die jeweils in unterschiedlichen bzw. senkrecht zueinander liegenden Richtung eine unterschiedliche Leuchtdichteverteilung aufweisen. Vorteilhaft wird ein robuster Scheinwerfer geschaffen, bei dem die Optikeinheit die Teillichtbündel der LED-Lichtquellen mit einem relativ geringen Anteil hoher Divergenzwinkel umformt. Die Lichtstrahlen der Teillichtbündel werden nur so weit wie nötig umgelenkt. Zum anderen können bei Linsen-Matrix-Scheinwerfern üblicherweise auftretende Farbeffekte minimiert werden. Die erzeugte Lichtverteilung bzw. die abgebildeten Lichtflecken weisen zwei unterschiedliche Hauptrichtungen auf, so dass eine örtlich gezieltere Lichtsammlung gewährleistet ist. Insbesondere kann hierdurch eine Entblendung von im Vorfeld des Fahrzeugs sich dynamisch ändernden Verkehrsobjekten erreicht werden, ohne dass ein zu kontrastreicher Übergang zwischen dem so gebildeten Entblendungsbereich und dem beleuchteten Bereich entsteht. Eine in Hauptabstrahlrichtung vorne angeordnete Vorderseite des ersten Linsenelementes weist eine in horizontaler Richtung verlaufende Rinne auf, die gegenüber oberen und unteren Rändern vertieft ausgebildet ist. Vorteilhaft kann hierdurch Korrigierung der LED-Lichtquellen in zwei unterschiedliche Hauptrichtungen bewirkt werden.

Nach einer bevorzugten Ausführungsform der Erfindung ist das erste Linsenelement und/oder das zweite Linsenelement derart ausgebildet, dass eine Teilung der Lichtflecken in vertikaler Richtung vorzugsweise 5° und in horizontaler Richtung weniger als 1,2°, insbesondere 1° beträgt. Vorteilhaft kann hierdurch eine feine Skalierung in horizontaler Richtung erfolgen, während in vertikaler Richtung ein guter Anschluss an das Vorfeld des Fahrzeugs bewirkt wird.

Nach einer Weiterbildung der Erfindung ist das erste Linsenelement rückseitig konkavförmig ausgebildet. Hierdurch ist das erste Linsenelement relativ einfach herstellbar.

Weitere Vorteile der Erfindung ergeben sich aus den weiteren Unteransprüchen.

Ein Ausführungsbeispiel der Erfindung wird nachfolgend anhand einer Zeichnung näher erläutert.

Es zeigen:
- Figur: eine Darstellung des erfindungsgemäßen Scheinwerfers mit eingezeichneten Lichtstrahlen.

Ein Scheinwerfer für Fahrzeuge kann beispielsweise zur Erzeugung einer Fernlichtverteilung eingesetzt werden. Bevorzugt wird der Scheinwerfer zur Erzeugung einer dynamischen Fernlichtverteilung eingesetzt, wobei verkehrssituationsabhängig einzelne LED-Lichtquellen 1 aus- bzw. eingeschaltet werden. Befindet sich eine maximale Anzahl von LED-Lichtquellen 1 mittels einer nicht dargestellten Ansteuereinheit im eingeschalteten Zustand, kann eine Voll-Fernlichtverteilung erzeugt werden, bei der die LED-Lichtquellen 1 zu Lichtflecken abgebildet werden, die den Verkehrsraum vollständig ausleuchten. Befindet sich ein Verkehrsobjekt, beispielsweise ein vorausfahrendes Fahrzeug oder ein entgegenkommendes Fahrzeug, in dem Vorfeld des Fahrzeugs, werden in Abhängigkeit von durch Detektiermittel erkannten Änderungen der aktuellen Lage dieses Verkehrsobjektes LED-Lichtquellen 1 ab- bzw. zugeschaltet, so dass lediglich eine Teil-Fernlichtverteilung erzeugt wird. Diese weist einen Entblendungsbereich auf, der nicht ausgeleuchtet wird und in dem sich das andere Verkehrsobjekt befindet. Hierdurch wird eine unerwünschte Blendung des im Vorfeld befindlichen Verkehrsobjektes verhindert.

Zur Erzeugung einer solchen Voll-Fernlichtverteilung bzw. Teil-Fernlichtverteilung bzw. Fernlichtverteilung weist der Scheinwerfer neben den in einem LED-Feld 2 angeordneten LED-Lichtquellen 1 eine Optikeinheit 3 auf, die durch ein erstes Linsenelement 4 und ein zweites Linsenelement 5 gebildet ist. Vermittels des ersten Linsenelementes 4 und des zweiten Linsenelementes 5 wird das von dem LED-Feld 2 abgestrahlte Lichtbündel L so geformt, dass die gewünschte Fernlichtverteilung entsteht.

Das LED-Feld 2 umfasst eine horizontal verlaufende Trägerplatte, die sich in horizontaler Richtung in einer Breite erstreckt. In Hauptabstrahlrichtung 6 des LED-Feldes 2 vor den LED-Lichtquellen 1 ist das erste Linsenelement 4 angeordnet, das asymmetrisch ausgebildet ist. In Hauptabstrahlrichtung 6 vor dem ersten Linsenelement 4 ist das rotationssymmetrisch angeordnete zweite Linsenelement 5 angeordnet. Das LED-Feld 2 bildet zusammen mit der Optikeinheit eine Baueinheit, die eine horizontale Länge aufweist. Die horizontale Breite des LED-Feldes 2 ist hierbei größer als ein Viertel der horizontalen Länge der Optikeinheit 3.

Das zweite Linsenelement 5 ist näherungsweise plankonvexförmig ausgebildet, wobei eine in Hauptabstrahlrichtung 6 vorne angeordnete Vorderseite konvexförmig und eine gegenüberliegende Rückseite annähernd eben ausgebildet sind. Das zweite Linsenelement 5 weist eine Quererstreckung auf, die größer ist als eine Quererstreckung des ersten Linsenelementes 4.

Das erste Linsenelement 4 ist im horizontalen Querschnitt nierenförmig ausgebildet. Das erste Linsenelement 4 weist eine in Hauptabstrahlrichtung 6 vorne angeordnete Vorderseite auf, die eine in horizontaler Richtung verlaufende Rinne aufweist. Diese Rinne bildet gegenüber einem horizontal verlaufenden oberen Rand und einem horizontal verlaufenden unteren Rand des ersten Linsenelementes 4 eine Vertiefung. Eine zu der Vorderseite gegenüberliegende und dem LED-Feld 2 zugewandte Rückseite des ersten Linsenelementes 4 ist konkavförmig ausgebildet. Im vorliegenden Ausführungsbeispiel weist die Rückseite des ersten Linsenelementes 4 einen Krümmungsradius im Bereich von 80 mm bis 120 mm und die Rinne in einem zu den Rändern benachbarten Bereich einen Krümmungsradius im Bereich von 40 mm bis 60 mm auf.

Das erste Linsenelement 4 ist bezüglich einer horizontalen Mittelebene symmetrisch ausgebildet.
Durch die Ausbildung des ersten Linsenelementes 4 werden die LED-Lichtquellen 1 zu Lichtflecken abgebildet, die in vertikaler Richtung und in horizontaler Richtung eine unterschiedliche Teilung aufweisen. In vertikaler Richtung ist die Teilung größer als in horizontaler Richtung. Die Teilung in vertikaler Richtung beträgt mindestens 5°, vorzugsweise 5 °. Die Teilung in horizontaler Richtung beträgt weniger als 1,2°, insbesondere 1°. Hierdurch kann eine genauere Kanaltrennung in horizontaler Richtung erfolgen, während die Kanaltrennung in vertikaler Richtung gröber ist. Es erfolgt eine Fourier-Transformation, wobei die Ortsverteilung in der Brennebene in eine Winkelverteilung umgesetzt wird.

Die Lichtverteilung setzt sich aus Lichtflecken zusammen, wobei benachbarte Lichtflecken in horizontaler Richtung aneinander angrenzen oder überlappen.

### Bezugszeichenliste

- 1: LED-Lichtquellen
- 2: LED-Feld
- 3: Optikeinheit
- 4: erstes Linsenelement
- 5: zweites Linsenelement
- 6: Hauptabstrahlrichtung

- L: Lichtbündel

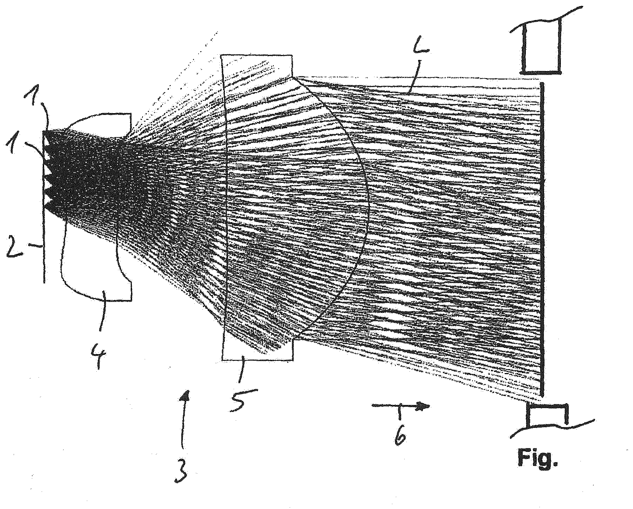

## Patentansprüche

1. Scheinwerfer für Fahrzeuge mit einer Mehrzahl von LED-Lichtquellen (1), die in einem LED-Feld (2) matrixartig angeordnet sind und die jeweils ein Teillichtbündel emittieren, das auf eine in Hauptabstrahlrichtung (6) vorne angeordnete Optikeinheit (3) trifft zur Abbildung von Lichtflecken, die sich zu einer vorgegebenen Lichtverteilung zusammensetzen, wobei die Optikeinheit ein erstes Linsenelement (4) und ein rotationssymmetrisch angeordnetes zweites Linsenelement (5) umfasst, mittels derer die Teillichtbündel so umgeformt werden, dass in der Lichtverteilung benachbart abgebildete Lichtflecken unmittelbar aneinanderliegen oder sich überlappen, wobei das erste Linsenelement (4) so geformt ist, dass die LED-Lichtquellen (1) zu Lichtflecken der Lichtverteilung abgebildet werden, die in vertikaler Richtung eine größere Teilung aufweisen als in horizontaler Richtung, **dadurch gekennzeichnet,**
- **dass** das zweite Linsenelement (5) in Hauptabstrahlrichtung (6) vor dem ersten Linsenelement (4) angeordnet ist,
- **dass** das erste Linsenelement (4) eine in Hauptabstrahlrichtung (6) vorne angeordnete Vorderseite aufweist, die eine in horizontaler Richtung verlaufende Rinne aufweist, wobei die Rinne gegenüber einem horizontal verlaufenden oberen Rand und einem horizontal verlaufenden unteren Rand des ersten Linsenelementes (4) eine Vertiefung bildet,
- **dass** das erste Linsenelement (4) eine in Hauptabstrahlrichtung (6) hinten angeordnete Rückseite aufweist, die konkavförmig ausgebildet ist,
- **dass** die Rückseite des ersten Linsenelementes (4) einen Krümmungsradius im Bereich von 80 mm bis 120 mm und dass die Rinne in einem zu dem oberen und zu dem unteren benachbarten Bereich konkav ausgebildet ist und einen Krümmungsradius im Bereich von 40 mm bis 60 mm aufweist.

2. Scheinwerfer nach Anspruch 1, **dadurch gekennzeichnet, dass** das erste Linsenelement (4) und/oder das zweite Linsenelement (5) derart ausgebildet sind, dass die Teilung der Lichtflecken in vertikaler Richtung mindestens 5° und in horizontaler Richtung weniger als 1,2° betragen.

3. Scheinwerfer nach Anspruch 1 oder 2, **dadurch gekennzeichnet, dass** das erste Linsenelement (4) und/oder das zweite Linsenelement (5) derart ausgebildet sind, dass die Teilung der Lichtflecken in vertikaler Richtung mindestens 5° und in horizontaler Richtung 1° betragen.

4. Scheinwerfer nach einem der Ansprüche 1 bis 3, **dadurch gekennzeichnet, dass** das erste Linsenelement (4) bezüglich einer horizontalen Mittelebene (M_{H}) symmetrisch ausgebildet ist.

5. Scheinwerfer nach einem der Ansprüche 1 bis 4, **dadurch gekennzeichnet, dass** das zweite Linsenelement (5) näherungsweise plankonvexförmig ausgebildet ist.

6. Scheinwerfer nach einem der Ansprüche 1 bis 5, **dadurch gekennzeichnet, dass** das erste Linsenelement (4) eine Quererstreckung aufweist, die kleiner ist als eine Quererstreckung des zweiten Linsenelementes (5).

7. Scheinwerfer nach einem der Ansprüche 1 bis 6, **dadurch gekennzeichnet, dass** das LED-Feld (2) eine horizontale Breite aufweist, die größer ist als ein Viertel der horizontalen Länge der durch das LED-Feld (2) und der Optikeinheit (3) gebildeten Baueinheit.

8. Scheinwerfer nach einem der Ansprüche 1 bis 7, **dadurch gekennzeichnet, dass** eine Ansteuereinheit zur Ansteuerung der LED-Lichtquellen (1) vorgesehen ist, so dass in Abhängigkeit von einer durch Detektiermittel erkannten Änderung der Verkehrssituation entweder eine maximale Anzahl von LED-Lichtquellen eingeschaltet werden zur Erzeugung einer Voll-Fernlichtverteilung oder eine verminderte Anzahl von LED-Lichtquellen (1) eingeschaltet werden zur Erzeugung einer Teil-Fernlichtverteilung enthaltend einen Entblendungsbereich, in dem sich ein anderes Verkehrsobjekt befindet.

## Claims

1. Headlamp for vehicles with a plurality of LED light sources (1) that are arranged in an LED field (2) in the form of a matrix and each of which emits a partial light beam that hits an optical unit (3) arranged at the front in the main radiation direction (6) to form light patches that merge into a specified light distribution, where the optical unit comprises a first lens element (4) and a second lens element (5) arranged rotationally symmetrically by means of which the partial light beams are transformed in such a way that light patches formed adjacently in the light distribution directly adjoin or overlap each other, where the first lens element (4) is formed in such a manner that the LED light sources (1) appear as light patches of the light distribution that feature a larger separation in a vertical direction than in a horizontal direction, **characterized in that**
- the second lens element (5) is arranged in front of the first lens element (4) in the main radiation direction (6)
- the first lens element (4) features a front side, arranged at the front in the main radiation direction (6), that features a channel running in a horizontal direction, where the channel forms an indentation in relation to an upper margin running horizontally and a lower margin running horizontally of the first lens element (4)
- the first lens element (4) features a reverse side at the back in the main radiation direction (6) that is concave in shape
- the reverse side of the first lens element (4) is designed to have a curvature radius in the range of 80 mm to 120 mm and the channel is designed to be concave in relation to the upper and to the lower adjacent area and features a curvature radius in the range of 40 mm to 60 mm.

2. Headlamp in accordance with Claim 1, **characterized in that** the first lens element (4) and/or the second lens element (5) is designed in such a way that the separation of the light patches amounts to at least 5° in a vertical direction and less than 1.2° in a horizontal direction.

3. Headlamp in accordance with Claim 1 or 2, **characterized in that** the first lens element (4) and/or the second lens element (5) is designed in such a way that the separation of the light patches amounts to at least 5° in a vertical direction and 1° in a horizontal direction.

4. Headlamp in accordance with one of Claims 1 through 3, **characterized in that** the first lens element (4) is designed to be symmetrical in a horizontal central plane (MH).

5. Headlamp in accordance with one of Claims 1 through 4, **characterized in that** the second lens element (5) is approximately planoconvex in design.

6. Headlamp in accordance with one of Claims 1 through 5 **characterized in that** the first lens element (4) features a crosswise extension that is smaller than a crosswise extension of the second lens element (5).

7. Headlamp in accordance with one of Claims 1 through 6, **characterized in that** the LED field (2) features a horizontal width that is larger than one quarter of the horizontal length of the assembly formed by the LED field (2) and the optical unit (3).

8. Headlamp in accordance with one of Claims 1 through 7, **characterized in that** an actuator unit for actuation of the LED light sources (1) is provided for, such that, depending on any change in the traffic situation identified by a means of detection, either a maximum number of LED light sources are switched on to generate a full high-beam distribution or a reduced number of LED light sources (1) are switched on to generate a partial high-beam distribution containing a glare-suppressed area in which another traffic object is located.

## Revendications

1. Phare pour véhicules comportant plusieurs sources lumineuses LED (1) disposées à la manière d'une matrice dans un champ LED (2) et qui émettent chacune un faisceau lumineux partiel qui touche une unité optique (3) disposée à l'avant dans le sens de rayonnement principal (6) pour former des points lumineux qui se combinent pour obtenir une répartition de l'éclairage prédéterminée dans lequel l'unité optique comprend un premier élément de lentille (4) et un deuxième élément de lentille (5) symétrique en rotation, au moyen desquels les faisceaux lumineux partiels sont remodelés de telle sorte que les points lumineux représentés de manière adjacente dans la répartition de l'éclairage sont directement adjacents les uns aux autres ou se chevauchent,
le premier élément de lentille (4) étant façonné de telle sorte que les sources lumineuses LED (1) forment des points lumineux de la répartition de l'éclairage qui ont un plus grand pas dans le sens vertical que dans le sens horizontal, **caractérisé en ce que**
- le deuxième élément de lentille (5) est disposé devant le premier élément de lentille (4) dans le sens de rayonnement principal (6),
- le premier élément de lentille (4) présente une face frontale disposée à l'avant dans le sens de rayonnement principal (6) qui présente une rainure qui s'étend dans le sens horizontal, la rainure formant une dépression par rapport à un bord supérieur s'étendant horizontalement et à un bord inférieur s'étendant horizontalement du premier élément de lentille (4),
- le premier élément de lentille (4) présente une face arrière disposée à l'arrière dans le sens rayonnement principal (6) qui est de conception concave,
- la face arrière du premier élément de lentille (4) présente un rayon de courbure compris entre 80 mm et 120 mm et que la rainure est concave dans une zone adjacente à la partie supérieure et à la partie inférieure et présente un rayon de courbure compris entre 40 mm et 60 mm.

2. Phare selon la revendication 1, **caractérisé en ce que** le premier élément de lentille (4) et/ou le deuxième élément de lentille (5) sont conçus de telle manière que la répartition des points lumineux est d'au moins 5° dans le sens vertical et inférieure à 1,2° dans le sens horizontal.

3. Phare selon la revendication 1 ou 2, **caractérisé en ce que** le premier élément de lentille (4) et/ou le deuxième élément de lentille (5) sont conçus de telle manière que la répartition des points lumineux est d'au moins 5° dans le sens vertical et 1° dans le sens horizontal.

4. Phare selon l'une des revendications 1 à 3, **caractérisé en ce que** le premier élément de lentille (4) est symétrique par rapport à un plan médian horizontal (MH).

5. Phare selon l'une des revendications 1 à 4, **caractérisé en ce que** le deuxième élément de lentille (5) est de forme approximativement plan-convexe.

6. Phare selon l'une des revendications 1 à 5, **caractérisé en ce que** le premier élément de lentille (4) a une extension transversale qui est plus petite qu'une extension transversale du second élément de lentille (5).

7. Phare selon l'une des revendications 1 à 6, **caractérisé en ce que** le champ LED (2) présente une largeur horizontale supérieure à un quart de la longueur horizontale formée par le champ LED (2) et l'unité optique (3).

8. Phare selon l'une des revendications 1 à 7, **caractérisé en ce qu'**une unité de commande pour les sources lumineuses LED (1) est prévue de sorte que, en fonction d'une modification de la situation du trafic détectée par les moyens de détection, soit un nombre maximum de sources lumineuses LED sont allumées pour produire une répartition totale de l'éclairage des feux de route, soit un nombre réduit de sources lumineuses LED (1) sont allumées pour produire une répartition partielle de l'éclairage des feux de route contenant une zone sans éblouissement dans laquelle se trouve un autre objet du trafic.
